# EUROPEAN PATENT APPLICATION

(11) **EP 4 509 449 A2**
(43) Date of publication of application: **19.02.2025**
(21) Application number: 24220761.1
(22) Date of filing: 30.11.2021
(51) Int. Cl.: B65H 49/00

(54) **ELECTRICAL APPLIANCE**

(30) Priority: 30.11.2020 GB 202018844; 16.12.2020 GB 202019899
(62) Divisional of application: 21819948.7
(71) Applicant: Kenwood Limited, Havant, Hampshire PO9 2NH (GB)
(72) Inventor: WEADEN, Jamie, Havant PO9 2NH (GB); MATTHEWS, Luke, Havant PO9 2NH (GB); SIMONE, Alessandra de, Havant PO9 2NH (GB)
(74) Representative: Mathys & Squire

(57) **Abstract**

An electrical appliance 100 is disclosed comprising a housing 100, a cable 140 and a cable-wrap 120, wherein the cable-wrap 120 comprises a spool 121 and an end portion 122 connected to the spool 121, and the end portion 122 includes a cavity 126 for receiving the cable 140. Other embodiments are also disclosed.

## Description

### Field

The present invention relates to an electrical appliance, in particular a handheld device for use with detachable tools, and which may be connected to a power source via a cable. The electrical appliance may typically be a food processing device such as a mixer or blender.

### Background

Food processing devices typically use detachable tools such as e.g., whisks or beaters driven to rotate by electric motors to process foods/beverages by e.g., mixing or whipping them. The electric motor is typically powered from mains electricity, either directly via a wired connection, or indirectly via a battery that charges from mains electricity using a wired connection.

Power is taken from the mains electricity via a power cord (or electrical cable) having a mains power plug configured to fit a mains socket at one end, and either a wired connection at the other, or a plug fitting a socket on the food processing device at the other. This cable/power-cord must be of sufficient length to allow convenient use about the kitchen; for example it may be a metre or more long.

Unfortunately, the user will often find that part of the cable is left slack during use and can become accidentally entangled with the tools or otherwise impair use of the device. This is particularly so where the cable connects to the device at a side or at a bottom of the device, as these are the areas in which the user is most active as they will typically stand to the side of the device and process foods/beverages beneath it. During storage of the device a loose cable can also cause problems, becoming accidentally entangled with other devices and objects it is stored with. Wrapping the cable about the outer housing of the device is difficult as most devices are smooth-sided.

Previously, this issue has been addressed by providing a cable-wrap portion on the device about which the loose cable may be wrapped and thus kept out of the way during use of the device. The cable-wrap typically takes the form of a deep groove defined in the housing, encircling part of the device into which the cable can be inserted and wrapped around the device.

However, this form of cable-wrap solution presents a number of problems. The first is that the cable can easily start to unwrap from the cable-wrap if it is not securely held there. A second problem is that as the cable will be wrapped around the cable-wrap an arbitrary number of times, it may exit the cable wrap at any orientation, including the disadvantageous sideways or downward orientations. The third is that the deep groove of the cable-wrap can become a trap for dirt and food, which can lead to the device becoming unsanitary.

The present invention aims to at least partially ameliorate the above-described problems of the prior art.

The present invention also seeks to improve the mechanisms related to ejection of tools attached to the device. Typically the device has an ejector button, the travel of which is in to and out of the device, which actuates a slider or other such mechanism for pushing the tools out of the sockets to which they are removably attached. This button is typically provided on an upper surface of the device, near to (i.e., reachable by movement of the fingers without changing the position of the hand gripping a handle of the device) a speed-control button. Typically four fingers of the hand, as well as the palm of the hand, are used to grip a handle, with the thumb remaining free to actuate controls of the device. The present invention also seeks to resolve problems associated with such devices

A housing is typically provided to house the electrical motor, electronics, and other components that may be harmed by coming into direct contact with the external environment (e.g., they are not water-proof) or which the user may be harmed by coming into contact with. Such components are hereafter referred to as "sensitive components". Ideally this housing comprises two or more shell-pieces, which co-operate to substantially enclose the sensitive components whilst still providing (where needed) holes for ventilation.

However, these shell components must be attached to each other, typically using one or more fasteners, glue, or by welding, or other attachment means. Fasteners (e.g., screws, bolts, pegs, clips etc.) are preferable as they permit opening of the housing for maintenance, and provide strong attachment. However, fasteners and other attachment means require recesses and/or ports to be formed in or through the exterior surface of the housing in order to receive the attachment means. These recesses/ports are both unsightly to the user as they break up a smooth external surface, and can act as food/dirt-traps which can render the appliance unhygienic (a particular concern with food processing devices).

One solution is to provide a fascia extending over the recesses/ports. However, this means providing a fascia in addition to the shell-pieces, which is inefficient and increases both the number of parts and the cost of the device.

Similarly, where ventilation holes are provided directly through the housing of the device, this can allow the ingress of dirt, food, or liquids directly into the device, and is unsightly. This can harm the sensitive components of the device and render it unhygienic.

One potential solution to the problem of ventilation holes is to provide a baffle in the ventilation hole. However, this increases the complexity of the housing and the time/cost of manufacturing it.

A further problem in the field of food processing devices is that it is desirable to be able to securely rest them on a surface in between periods of usage. For example, for hand-mixers it is desirable to rest them with their mixing-tools extended above a bowl to catch drops of food-material retained on the mixing-tools after usage. However, it is difficult to provide a sufficiently large surface of the device clear of protrusions, holes through which material on the surface may enter the housing, switches etc. to support the device in a stable manner.

The aim of the present invention is to at least partially ameliorate the above-described problems.

### Summary of the Invention

According to an aspect of the invention, there is provided an electrical appliance, comprising a housing having an outer surface and a cable-wrap comprising a spool for a cable; wherein the cable-wrap extends over a portion of the outer surface, the portion of the outer surface over which the cable-wrap extends having at least one feature.

Due to the cable-wrap extending over the at least one feature on the housing, the cable-wrap can provide protection for the at least one feature.

The at least one feature may comprise a formation, such as one or more holes in the housing, preferably ventilation holes. The holes may be through-holes or blind holes. By way of example, through-holes may provide ventilation of the electrical parts within the housing, while blind holes may be used for connection of housing parts.

Preferably, the one or more holes are shielded by the cable-wrap. The cable-wrap may be positioned such that there is no direct line or path between the hole and the external surroundings. That is, the one or more holes are (preferably wholly) covered by the cable-wrap. The cable-wrap can prevent the holes from being directly exposed, which may help prevent ingress of food or dirt into the holes.

The one or more holes may be shielded by the spool. The spool may comprise a wall extending substantially perpendicular to the housing surface, and can provide shielding for holes located centrally on the surface of the housing. It may be advantageous for the direction of the airflow to provide holes located centrally on the surface of the housing.

The cable-wrap may further comprise one or more holes for ventilation of the one or more holes in the housing. In this manner, the housing and the cable-wrap may form double layered holes or double ventilation holes. This can allow the airflow to be filtered twice. This can provide air-flow pathways from the inner parts to the outside, but can also act to further deter the ingress of food into the housing.

Preferably, the spool comprises one or more holes. These can provide ventilation for holes shielded by the spool, through which air can flow to ventilate the inner parts of the appliance. As such, this can provide double ventilation.

The cable-wrap may further comprise an end portion connected to the spool, such that the ventilation holes of the spool are shielded by the end portion. The end portion can prevent the holes on the spool from being directly exposed, which can deter the ingress of food or other dirt. Preferably, this end portion comprises a wall extending towards the housing.

There may be 2 holes in the housing, or preferably 4 holes, more preferably 6 holes, or even more preferably 8 holes. Preferably, half of these may be located within the spool such that they are shielded by the spool. There may be a further 2 holes on the spool, or preferably 4.

In some instances, the housing may comprise a further feature for providing airflow through the appliance, preferably wherein the cable-wrap is located at or adjacent to an end of the appliance and the further feature is located at an end of the appliance opposite to the cable-wrap. This can provide a substantially straight path for airflow through the appliance, which can encourage more efficient ventilation.

The housing may comprise two or more housing-shells, and at the least one feature may be associated with fixing elements configured to hold the two or more housing-shells together. This can allow for simplified manufacture of the housing, with a minimised risk of dirt or food becoming trapped in the join due to shielding by the cable-wrap.

Preferably, the cable-wrap comprises a notch to locate the cable, and the at least one feature is not aligned with the notch. Locating the notch away from the immediate vicinity of the feature can act to prevent the feature from becoming directly exposed.

The appliance may further comprise a base for supporting the appliance on a surface, the cable-wrap being located at or adjacent to the base, wherein the housing comprises a body part and a handle part, and the base extends across the body part and the handle part. This arrangement can improve the stability of the appliance.

According to a further aspect of the invention, there is provided an electrical appliance having a base for supporting the appliance on a surface, the appliance comprising a housing having a body part and a handle part, and a cable-wrap comprising a spool for carrying the cable; wherein the cable-wrap is located at or adjacent to the base, and wherein the base extends across the body part and the handle part such that the cross-sectional area of the base is no smaller than 80% of the cross-sectional area of the appliance, and preferably no smaller than 90%. The cable wrap may include a cavity/recess/slit for receiving the cable.

Preferably, the cross-sectional area of the base is no smaller than 85% of the cross-sectional area of the appliance, more preferably no smaller than 90%, and even more preferably no smaller than 95%.

A large ratio of the cross-sectional area of the base and/or cable-wrap to the appliance can improve the stability of the appliance.

The cable-wrap may preferably form the base. Preferably, the cross-sectional area of the cable-wrap is no smaller than 80% of the cross-sectional area of the appliance, and more preferably no smaller than 90%.

Preferably, the cable-wrap is configured to support the housing when the appliance is rested on the cable-wrap. Preferably the cable-wrap comprises an end portion, and more preferably the end portion has a flat outer surface, or a substantially flat outer surface such that it can be rested upon a flat surface in a stable manner. For example, the outer surface may have a raised ring around the perimeter on which the cable-wrap may rest on a flat surface.

The maximum cross-sectional dimension of the base may extend over at least 80% of the maximum cross-sectional dimension of the appliance, and preferably 90%. This ratio can improve the stability of the appliance.

Preferably, the maximum cross-sectional dimension of the cable-wrap may extend over at least 80% of the maximum cross-sectional dimension of the appliance, and preferably 90%.

The centre of gravity of the appliance may be coincident with or located within the central 50% of the spool, preferably within the central 30%, even more preferably within the central 10%. This can improve the stability of the appliance when rested on the cable-wrap, for example it may assist in preventing the appliance from being accidentally knocked over.

Preferably, the spool has a maximum cross-sectional dimension of at least 50% of the maximum cross-sectional dimension of the appliance, and preferably between 50% and 70%. This can improve the strength of the spool, and the stability of the appliance.

Preferably, the centre of gravity of the appliance is located within the half of the appliance adjacent to the base, preferably within the 40% of the appliance adjacent to the base, more preferably within the 30% of the appliance adjacent the base. This would mean the centre of gravity is in the lower half of the appliance when it is rested on the base, which can help to prevent it from being accidentally knocked over.

Preferably, the housing and the handle are configured such that maximum cross-sectional dimension of the appliance varies by less than 10% along the length of the appliance, preferably by less than 5%. This can further aid the stability of the appliance.

The housing may be configured to accommodate tools extending therefrom, preferably wherein the tools extend in a direction parallel to an outer surface of the base, and/or wherein the tools are located at a distance of 8 cm or more from the outer surface of the base. In this configuration, the tools would extend substantially horizontally when the appliance is rested upon the cable-wrap, which allows the tools to be positioned over a bowl. The bowl can collect drips from the tools, minimising mess.

In a preferable example, the handle part and the body part are both integral to the appliance. Preferably the body part and the handle part form a continuous part. Preferably the handle part and the body part are integral to the housing. The handle may be defined by an aperture in the housing. This aperture may have an elongate shape parallel to the longitudinal axis or length of the appliance.

Preferably, the handle part extends along at least part of the length of the appliance, preferably wherein the body part and the handle part are adjacent elongate parts.

Preferably, the handle extends along at least 60% of the length of the appliance, preferably at least 70%, even more preferably at least 75%.

According to an aspect of the invention, there is provided an electrical appliance, comprising a housing having a body part and a handle part, a cable and a cable-wrap, wherein the cable-wrap comprises a spool and an end portion connected to the spool, and the end portion includes a cavity for receiving the cable, and wherein the cable-wrap extends over both the body part and the handle part. Preferably, the cable-wrap extends over all of a gap (for receiving the user's hand) between the body part and handle part. Preferably, an outer surface of the (end portion of the) cable-wrap is shaped so as to follow the curvature of an outer surface of the body part and/or the handle part.

This arrangement can allow for the cable to be more easily accommodated, and for further cable to be accommodated due to the large size of the cavity, which covers both the body part and the handle part. It can also enhance the stability of the appliance due to the width of the cable-wrap, upon which the appliance may be rested.

Preferably the cable-wrap forms the base of the appliance. That is, the cable wrap may be configured to be mounted at an end of the kitchen appliance, preferably such that the body may be supported on the cable wrap.

Preferably, the cavity can accommodate the cable, and when the appliance is rested on a flat surface in at least one configuration, the cable slumps down into the cavity under its own weight. This can advantageously allow for simple and neat storage of the appliance.

The electrical appliance may be a kitchen appliance, preferably the appliance may be a handheld kitchen appliance, and even more preferably the appliance may be a hand mixer.

According to an aspect of the invention, there is provided a removable cable-wrap. This can allow the cable-wrap to be removed and cleaned, or simply replaced to alter the appearance of the appliance. The removable cable wrap may be configured to be mounted at an end of the kitchen appliance, preferably such that the body may be supported on the removable cable wrap.

Preferably the cable-wrap comprises resilient formations for attachment to the housing. This can allow the cable-wrap to be easily reversibly secured and then removed.

The electrical appliance as described may comprise such a removable cable-wrap.

Preferably, the housing and the cable-wrap comprise corresponding formations which engage for reversible attachment. These may be screw or threaded formations, bayonet arrangement formations, or resilient formations.

According to an aspect of the invention, there is provided an electrical appliance, comprising a housing substantially surrounding sensitive components, a cable and a cable-wrap, wherein the cable-wrap extends over a corresponding surface of the housing having through-holes and/or recesses defined therein.

Preferably, the through-holes and/or recesses comprise ventilation holes.

The housing may comprise two or more housing-shells, and the through-holes and/or recesses comprise through-holes and/or recesses configured to receive fixing elements configured to hold the two or more housing-shells together.

Preferably, the cable-wrap is configured to support the housing above a flat surface when the appliance is rested on the flat surface supported by the cable-wrap.

The housing may comprise tools extending therefrom, and the cable-wrap may be configured and arranged to support the housing with the tools extending horizontally therefrom, preferably at a height of 8 cm or more above the flat surface.

According to a further aspect of the invention, there is provided an electrical appliance, comprising a housing, a handle, a cable and a cable-wrap, wherein the cable-wrap extends over a surface of the housing and a surface of the handle.

According to an aspect of the invention, there is provided an electrical appliance, comprising a housing, a cable and a cable-wrap, wherein the cable-wrap comprises a spool and an end portion connected to the spool, and the end portion includes a cavity for receiving the cable.

By providing a cavity, retention of the cable within the cable-wrap can be improved. The cavity may remain open during use - that is, the cavity is preferably not associated with a lid. The cavity may be formed as a slit in the cavity, preferably an annular slit and/or wherein said slit is an open (i.e. not covered) slit in the housing, more preferably wherein a flange extends over a portion of the slit (such the end portion is formed in a dish shape).

In order to improve the retention of the cable, preferably the cavity can accommodate the cable. Preferably the cavity can accommodate at least half of the cable, more preferably at least 80% and even more preferably at least 90%.

To aid in the accommodation of the cable by the cavity, when the appliance is rested on a flat surface in at least one configuration, the cable preferably slumps down into the cavity under its own weight. Preferably the cable-wrap itself comprises a flat end such that the appliance is stable when rested upon it bottom-most. To aid in supporting the appliance when resting on the cable-wrap, there may further be provided a handle which also contacts the flat surface in this configuration.

In a preferable configuration, the maximum cross-sectional dimension of the spool is less than half the maximum cross-sectional dimension of appliance in the region of the spool. This can provide space in the cavity to accommodate the wire and may encourage the slumping of the wire into the cavity to be retained. Preferably the maximum cross-sectional dimension of the spool is between 25 and 40% the maximum cross-sectional dimension of appliance in the region of the spool, and more preferably it is between 30 and 35%.

Preferably the dimension of the cavity perpendicular to the axis of the spool is greater than the dimension of the cavity along the axis of the spool. This may aid in providing space to accommodate the cable and encourage the slumping movement of the cable while keeping the cable-wrap compact.

Preferably the dimension of the cavity along the axis of the spool is at least half the maximum cross-sectional dimension of the cable, and preferably at least the maximum cross-sectional dimension of the cable. This can allow the cable to be at least partially, or more preferably, fully accommodated within the cavity.

In order to encourage the slumping into the cavity, preferably the cable-wrap forms a dish-shaped recess.

In order to encourage neat winding of the cable within the cable-wrap, preferably the end of the cavity or recess comprises ridges or grooves.

In order to further improve retention of the cable within the cable-wrap, preferably the cable wrap includes at least one formation for forming a pinch point to restrain the cable. This can offer a stable exit point for the cable by providing a formation around which the cable can bend when exiting the cable-wrap.

Preferably the cavity is defined between the end portion and the housing. This can provide a compact cable-wrap within the appliance, and improve ease of manufacture

In a preferable configuration, the spool extends beyond the confines of the cavity, preferably such that the cable can be wrapped around the spool and then allowed to slump down into the cavity where it is retained.

Preferably the extension of the spool beyond the cavity in combination with the housing defines a slit of sufficient width to accommodate the cable. This can provide an entrance to the cavity. Through this slit the cable may be wrapped around the spool, and then allowed to slump into the cavity.

Preferably the end portion is shaped so as to follow the curvature of an outer surface of the housing.

Preferably the cable-wrap is releasably attachable to the housing of the appliance, so that for example it can be removed for cleaning and then reattached.

In a preferable configuration, the electrical appliance may further comprise a notch configured to locate the cable on its exit from the housing. This can assist in securing the cable as it exits, which prevents the cable from becoming unravelled. It may also aid in directing the orientation in which the cable exits the appliance.

Hence, in a further aspect, there is provided an electrical appliance having a housing and a cable, wherein the appliance is handheld and the housing comprises a notch configured to locate the cable on its exit from the housing.

Preferably, the notch is formed in the cable-wrap. In this way, the notch can secure the cable as it exits directly from the cable-wrap in which it is retained. In this manner, the length of cable required can be decided upon by the user and altered as appropriate, and any excess cable can be controlled by wrapping it around the spool and accommodating it in the cable-wrap, and then the end may be secured within the notch. This may be particularly advantageous for keeping the cable out of the way in a handheld appliance, which may be used at different distances from the socket.

The appliance may further comprise at least one protrusion to form a pinch-point for restraining the cable. The or each pinch-points are preferably located on one or both sides of the notch. This can provide further security at the exit and provide a point around which the cable can bend.

In a preferable configuration, the electrical appliance further comprises a tool provided on a first side of the appliance and the notch is provided on a second side of the appliance, preferably wherein the second side is opposite to the first side. This may assist in keeping the cable from interfering with the tool.

To further secure the cable within the notch, the cable may be resilient, and the notch may have a width that is less than the maximum cross-sectional dimension of the cable. This may be between 80 and 100% of the maximum cross-sectional dimension of the cable, and more preferably between 90 and 95%. Preferably the width of the notch reduces towards its blind end. More preferably, the blind end of the notch may have a U or V shape, for example to pinch the cable when it resides within the notch.

According to a further aspect there is provided an electrical appliance for operating removably attachable tools, comprising an ejection controller configured on actuation to actuate a mechanism for ejecting the tools from the appliance and a user input configured to control a function of the appliance; wherein the ejection controller and the user input are spaced apart from one another, and wherein the user input has an actuation direction different to the direction from the user input to the ejection controller.

Preferably, this direction between the user input and the ejection controller is measured along the surface of the appliance.

Preferably, the user input actuation direction is different from the direction of the line connecting the second user input and the ejection controller across the surface of the appliance. By placing the controllers at a distance and arranging the actuation directions in this manner, the likelihood of accidentally actuating the wrong controller by, for example, fingers slipping, can be reduced. Additionally, preferably, both controllers cannot be actuated by the same hand simultaneously. Particularly when the user has gripped the tool(s) to be ejected with their other hand to remove them when pressing the ejector button, unintended energising of the motor and driving of the tools whilst gripped in the hand can cause significant injury. This is particularly an issue with speed switches having a pulse setting where the device can be instantaneously set to a high-speed output. The safety of the appliance may therefore be improved by the present invention.

Preferably, the actuation direction of the user input may be perpendicular to the direction from the user input to the ejection controller. This can act to further ensure that it is difficult to actuate the wrong controller by, for example, fingers slipping.

Alternatively, the ejection controller actuation direction of the user input may be at an angle of 30 degrees to the direction from the user input to the ejection controller, or preferably at 45 degrees, or more preferably at 60 degrees, or even more preferably at 75 degrees.

To further aid in minimizing the risk of the user being able to actuate the controllers at the same time accidentally or actuate the wrong controller, the ejection controller and user input may be located at a distance of at least 3 cm from one another measured along a surface of the appliance, and preferably of at least 5 cm, and even more preferably of at least 8 cm. Preferably this distance is no greater than 20 cm, and more preferably no greater than 15 cm.

To further aid in minimizing the risk of accidental actuation of the wrong controller, the ejection controller and user input may be located on surfaces on different planes of the appliance, the surfaces being at at least 30 degrees to each other, and preferably at an angle of at least 45 degrees, more preferably at an angle between 30 and 90 degrees, even more preferably at an angle between 45 and 90 degrees. This may encourage the user to adjust their grip on the appliance when moving from one controller (say the user input) to the other controller (the ejection controller), and as such they may not be able to use the same hand for actuation of both controllers.

In a preferable configuration, the appliance is a handheld appliance further comprising a handle configured to be gripped by four fingers of a hand of a user while a thumb of the same hand actuates the user input, in which configuration the ejection controller is located outside the arc of movement of any of the fingers and thumb of the hand. This may aid in minimizing the risk that the user accidentally actuates a controller different to the one intended.

The ejection controller and user input may be controllers of differing type, preferably of different types selected from the list comprising sliders, buttons, and pivot-switches. Alternatively, the ejection controller and user input may be switches having directions of actuation along different axes, and preferably along axes that are substantially orthogonal to each other. Both these configurations may help to prevent accidental actuation of the wrong controller.

In a preferable configuration, the actuation of the ejector controller does not include the travel of the button into and out of the appliance. This can avoid the need for the button to protrude from the appliance a significant distance in order to provide sufficient travel of the button, as is often the case in prior art systems. This can reduce the likelihood that the controller will become caught on and accidentally actuated by e.g., the clothing of the user. Furthermore, it may reduce the physical effort required to actuate the controller, as depressing a button its entire length using only one finger, even the thumb, may be difficult for the elderly or those with mobility problems to achieve. This can also avoid the problem that it is easy for the finger to slip off a button during use, as contact between the finger and the button is only maintained by the resilient force of the button (biased by e.g., a coil spring) resisting the finger with little mechanical connection between the two. Such a prior art configuration could lead to the button snapping back to the extended position and the finger accidentally striking the device and potentially actuating the controls of the appliance unintentionally.

Preferably, the ejection controller is a slider, and more preferably the slider comprises a grip portion configured for gripping between opposed fingers. This may improve the grip of the user on the ejection controller, and therefore minimize the likelihood that their fingers may slip.

Preferably, the appliance further comprises a vent, the vent being located on the same aperture as the slider. Venting can help to keep the motor cool by circulation of air, and the use of the same aperture for the vent and the slide can streamline the design and improve ease of manufacture.

Preferably the user input is a speed controller.

Preferably the appliance is a kitchen appliance, and the appliance may be handheld; if the appliance is a kitchen appliance, more preferably it is a hand mixer.

The housing may comprise a first and a second housing shell, and the ejection controller and/or user input may extend into the main housing through one or more through-holes defined at a join between the two housing shells cooperatively defined by the housing shells. This can avoid the need to form a through-hole through the housing shells. The join may preferably be partly or wholly covered by a third housing shell to hide the unsightly join. The third housing shell optionally firmly connects the first housing shell and the second housing shell, which preferably allows a simple construction while maintaining strength.

In an aspect of the invention an electrical device is disclosed having one or more tools, comprising a main housing and a cable-wrap, wherein the cable-wrap defines a groove configured to receive an electrical cable during wrapping. The width of the groove varies axially and/or radially relative to an axis of wrapping of the electrical cable to provide a securing feature configured to secure the electrical cable within the groove for preventing interference between the cable and the tools.

This may be advantageous as it provides a securing feature integrally to the groove.

Preferably, the electrical device may be a hand-held electrical device and/or the tools are rotary tools. Rotary tools may be more likely to interfere with a cable.

Preferably, the cable-wrap may be releasably attachable to the main housing. The cable-wrap may thus be removed for cleaning.

Optionally, the groove may be co-operatively defined between the cable wrap and the main housing of the hand-held device. This can allow a simple construction.

The securing feature may optionally comprise a narrowing in width of the groove from within the groove radially towards the outside of the groove, preferably at a rotational location so as to form one or more pinch-points. This may provide a simple, easy-to-release way of securing the cable within the groove.

In another potential configuration, the securing feature can comprise a radially-extending notch defined in the cable-wrap configured to receive the cable for securing therein. Similarly this can provide a securing means that is simple and easy to use.

In an optional configuration the cable-wrap comprises two pinch-points located rotationally either side of the notch. This can make it harder for the cable to unintentionally slip from the notch.

Preferably the securing feature is located towards a first side of the device different to a second side of the device from which the tools extend. As the cable may tend to extend from the device proximate to the securing feature (it will tend to unwind until the cable has to unwind past the securing feature) this can help to avoid interference between the cable and the tools.

Preferably the securing feature is located only located towards the first side.

In a preferable configuration the second side is on an opposite side of the device to the first side. This can further help avoid interference.

The cable wrap may preferably be configured to stably support the device when it is rested on a flat surface with the cable-wrap bottom-most. In this way the utility of the cable-wrap can be increased.

Preferably the cable-wrap is configured to substantially surround the cable as it slumps downwardly when the device is rested on a flat surface with the cable-wrap bottom-most. In this way the cable can be retained within the cable-wrap when the device is in a natural resting orientation.

Preferably the cable-wrap forms a dish-shaped recess into which the cable slumps. In this way the cable can be secured on all sides.

The device optionally further comprises a handle that is configured to support the device when it is rested on the cable-wrap. This can lend the device greater stability.

The main housing may optionally comprise two housing-shells. The cable-wrap can attach to the main housing via an attachment hole co-operatively formed by the two housing shells. This can render the device easier to manufacture and more simple in construction.

In another aspect of the invention, an electrical device having removably-attachable tools is disclosed comprising an ejection controller configured on actuation to actuate a mechanism for ejecting the tools from the device, and a second user-input configured to control a function of the device. The ejection controller and the second user input are located on a main housing of the device, and:
1) the ejection controller and second user-input are separated by a minimum distance of 5 cm or more, and preferably of 8 cm or more, measured along a surface of the main housing,
   and/or
2) the ejection controller and second user-input are located on surfaces of the main housing that extend at an angle of more than 30 degrees to each other, and preferably at an angle of more than 45 degrees, or between 30 and 90 degrees, or between 45 degrees and 90 degrees,
   and/or
3) the ejection controller and second user input are switches having directions of movement along different axes, and preferably along axes that are orthogonal to each other,
   and/or
4) the ejection controller and second user-input are controllers of differing type, preferably
   of different types selected from the list comprising sliders, buttons, and pivot-switches, and/or
5) the ejection controller and second user input are switches having directions of actuation along different axes, and preferably along axes that are substantially orthogonal to each other.

All of 1)-5) help decrease accidental actuation of one of the ejection controller and the second user input when actuation of the other is intended.

Preferably, the second user input is a speed-switch, preferably having a pulse setting. Since speed switches control tool-speed of the appliance, and pulse settings give instantaneous high-speed output, these are particularly advantageous switches on which to avoid potential accidental activation.

Preferably the ejection controller is a slider, the slider comprising a grip portion configured for gripping between opposed fingers. Using a slider to actuate the ejection mechanism, which can be stiff, can allow the slider to be gripped during actuation making actuation more secure.

Optionally the electrical device is a hand-held electrical device, having a handle configured, dimensioned and arranged to be gripped by four fingers of a hand against the palm of the hand, whilst the thumb of the hand actuates the second user-input. This can allow convenient one-handed operation of the device.

Optionally the ejection controller is located outside of the arc of movement of the thumb of the hand with four fingers gripping the handle against of the palm of the hand, assuming the hand to be that of an average adult human. This can help avoid accidental actuation of the ejection controller.

The main housing may, in an optional configuration, comprise a first and a second housing shell, and the ejection controller and/or second user input may extend into the main housing through one or more through-holes defined at a join between the two housing shells cooperatively defined by the housing shells. This can avoid the need to form through-hole through the housing shells.

The join may preferably be partly or wholly covered by a third housing shell. This can hide the unsightly join.

The third housing shell optionally firmly connects the first housing shell and the second housing shell. This may allow a strong and simple construction.

In another aspect of the invention, a hand-mixer comprising the above-described cable-wrap, a speed-switch, an ejection controller, and the accidental actuation features 1)-5) discussed above is disclosed. This combination of features may advantageously render the device safer.

In another aspect of the invention, a hand-mixer is disclosed having a removably-attachable cable-wrap. This may allow the cable-wrap to be detached from the device and cleaned separately in e.g., a dishwasher machine.

In another aspect of the invention, a hand-mixer having a cable-wrap is disclosed, the hand-mixer being provided with a stand to which it is removably-attachable.

In another aspect of the invention, a hand-held appliance with stand is disclosed. The hand-held appliance is removably attachable to the stand and communicates (preferably wirelessly) therewith, for providing sensor feedback to the hand-held appliance from sensors located in the stand and/or for controlling the hand-held appliance using a user-interface located in the stand.

The term 'cable-wrap' as used herein preferably connotes a component about which a cable may be wrapped; more preferably comprising a spool and an end portion; still more preferably wherein the end portion is located and an end of a spool optionally to prevent a cable sliding off the spool.

The term 'cable' as used herein is to be considered interchangeable with terms such as "power-cable", "power-cord", "cord", "electrical cable", "electrical cord" and such similar.

As used herein, the term "removable attachment" (and similar terms such as "removably attachable"), as used in relation to an attachment between a first object and a second object, preferably connotes that the first object is attached to the second object and can be detached (and preferably re-attached, detached again, and so on, repetitively), and/or that the first object may be removed from the second object without damaging the first object or the second object; more preferably the term connotes that the first object may be re-attached to the second object without damaging the first object or the second object, and/or that the first object may be removed from (and optionally also re-attached to) the second object by hand and/or without the use of tools (e.g. screwdrivers, spanners, etc.). Mechanisms such as a snap-fit, a bayonet attachment, and a hand-rotatable locking nut may be used in this regard.

The invention also encompasses a kit of parts for constructing any of the apparatuses or apparatus elements herein described.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances, and any reference to "food" herein may be replaced by such working mediums.

The invention described here may be used in any kitchen appliance and/or as a stand-alone device. This includes any domestic food-processing and/or preparation machine, including both top-driven machines (*e.g.* stand-mixers) and bottom-driven machines (*e.g.* blenders). It may be implemented in heated and/or cooled machines. It may be used in a machine that is built-in to a work-top or work surface, or in a stand-alone device. The invention can also be provided as a stand-alone device.

"Food processing" as described herein should be taken to encompass chopping, whisking, stirring, kneading, mincing, grinding, shaping, shredding, grating, cooking, freezing, making ice-cream, juicing (centrifugally or with a scroll), or other food-processing activities involving the physical and/or chemical transformation of food and/or beverage material by mechanical, chemical, and/or thermal means.

### Brief Description of Drawings

One or more aspects will now be described, by way of example only and with reference to the accompanying drawings having like-reference numerals, in which:
Figure 1 shows a side-on drawing of a food processing appliance according to an embodiment of the invention;
Figure 2 shows a side-on drawing of the food processing appliance of Figure 1 resting in a vertical, rear-down orientation;
Figure 3a shows a rear-on drawing of the food processing appliance of Figure 1 with the cable hidden;
Figure 3b shows a rear-on drawing of the food processing appliance of Figure 1 with the cable shown;
Figure 4 is a perspective drawing showing the top, side, and rear of the appliance of Figure 1;
Figure 5a is a partial cross-sectional drawing of the cable-wrap across the line A-A of Figure 3a, shown without the cable;
Figure 5b is a partial cross-sectional drawing of the cable-wrap across the line B-B of Figure 3a, shown with the cable sitting within the cavity;
Fig. 6a is a perspective drawing showing the top, other side, and front of the appliance of Figure 1, with an ejection switch in the unactuated position; and,
Fig. 6b is the drawing of Fig. 6a with broad direction arrows showing the movement direction of various components, and the ejection switch in the actuated position.
Figure 7 shows a front/side-on perspective drawing of a food processing appliance according to a further embodiment of the invention;
Figure 8 shows a side-on drawing of the food processing appliance of Figure 7 resting in a vertical, rear-down orientation;
Figure 9 shows a front-on drawing of the food processing appliance of Figure 7 with the cable hidden;
Figure 10 shows a side-on drawing of the rear of the food processing appliance of Figure 7 with the cable shown;
Figure 11 is a partial, schematic, cutaway through the rear of the device along the line L-L of Figure 9; and
Figure 12 is a side-on view of the device of Figure 7 attached to a stand.

### Specific Description

### Cable Wrap

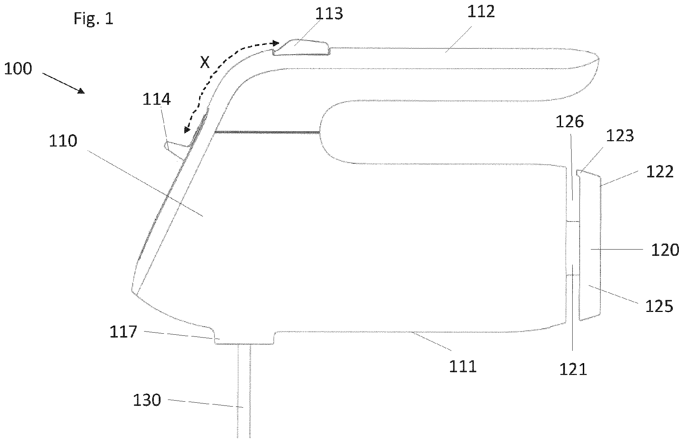

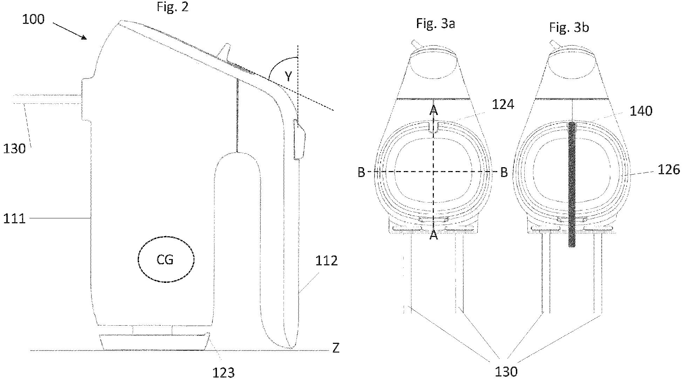

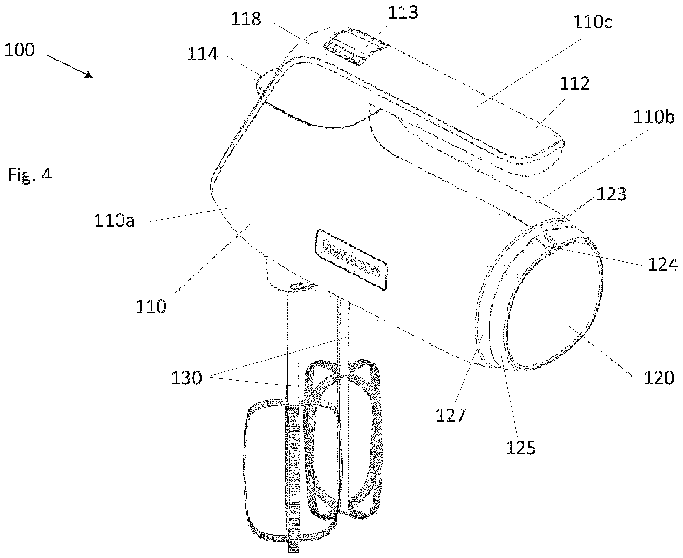

An exemplary food processing appliance 100 according to the present invention (in this case a hand-mixer) is shown in side view in Figures 1 and 2, end view in Figures 3a and 3b, and perspective view in Figure 4. The food processing appliance 100 has a main housing 110, which comprises a shell (e.g., plastic shell or metal shell) surrounding a motor, electronics, gearing, and other components necessary for the operation of the food processing appliance 100. One, or two, or more food processing tools 130 are attached at a lower surface of the appliance 111, and preferably removably attached, to the food processing appliance 100 so as to receive drive impetus from it for carrying out food processing tasks. The appliance 100 is connected to a power source via a cable 140 as shown in Figure 3b (not shown in Figures 1, 2, 3a or 4).

A cable-wrap 120 is attached to the food processing appliance 100. The cable-wrap 120 is preferably made of a food-safe material, which may be the same as that used for the housing of the food processing appliance.

In the exemplary food processing appliance 100 of Figure 1, the cable-wrap 120 takes the form of a spool or wrapping-post 121 which attaches to the main housing 110 at one axial end, with an end portion in the form of a flange 122 extending radially from the other axial end to that which attaches to the main housing 110. In this way the cable-wrap 120 co-operatively forms an annular groove-shaped cavity 126 for receiving the cable 140 defined between an external wall of the main housing 110 and the flange 122. This is advantageous as it helps avoid the need for two flanges 122.

The wrapping-post 121 defines an axis about which the cable 140 may be wrapped rotationally (i.e., by winding it about the wrapping-post). The cable 140 may stack on the post 121 radially (i.e., on top of the already-wrapped cable 140) and/or axially (i.e., next to the already-wrapped cable 140 on the wrapping-post 121).

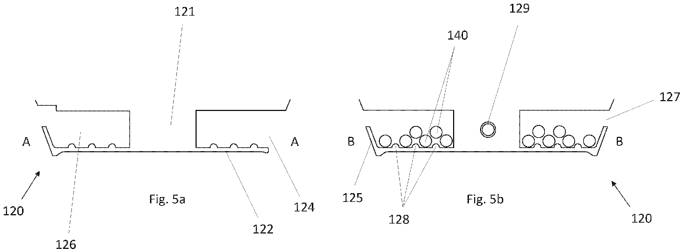

Figures 5a and 5b illustrate two perpendicular partial cross-sections of the cable-wrap 120 across the lines A-A and B-B respectively, as indicated on Figure 3a. The cable 140 is omitted from Figure 5a but shown in Figure 5b, where it is shown running through point 129 located at the centre of the spool 121, in the vicinity of the exit point on the surface of the spool 121. The cable 140 is also illustrated residing within the cavity 126 between ridges 128, stacking both axially and radially. The width of the groove-shaped cavity 126 formed by the flange 122 may vary. The flange 122 comprises a wall 125 which extends towards the main housing in a substantially axial orientation. In the exemplary embodiment, the dimension of the cavity 126 perpendicular to the axis of the wrapping-post 121 is larger than the dimension parallel to it, such that the cavity 126 can accommodate several wraps of the cable 140, while the wall 125 ensures the wraps of the cable remain securely within the cavity 126 of the cable-wrap 120.

The entrance to the cavity 126 is a slit 127 between the wall 125 and the main body of the housing 110. The width of the slit 127, measured in a direction parallel to the axis of the wrapping-post 121, is determined by the height of the wall 125 in this direction and its distance from the housing 110 (or, in an alternative configuration, a second flange or end portion adjacent the housing 110). In an exemplary embodiment, the width of the slit 127 is similar to the width of the cable 140 to be received, such that the cable 140 can be placed within and removed from the cable-wrap 120 easily but will not easily fall out in an unintentional manner. The width of the slit 127 may be between 100 to 200% of the maximum cross-sectional dimension of the cable 140, and preferably between 125 to 175%.

Additionally, in the exemplary embodiment, the height of the wall 125 in the direction of the axis varies such that the width of the slit 127 varies around the circumference of the cable-wrap 120. For example, as shown in Figure 1, the wall 125 of the flange 122 features one or more protrusions extending axially towards the housing 110 to form a pinch-point 123 in the slit that is less wide than a majority of the slit 127. In this manner, it is less easy for the cable 140 to accidentally slip past the pinch-point 123. This pinch-point 123 may, for example, cause the slit to have a width equal to a width of the cable 140, or wider by 10% or less, or even slightly less than the diameter (or other maximum cross-sectional dimension) of the cable 140 such that the cable can just squeeze through it, but also such that the cable cannot slip through it easily. The pinch point 123 provides extra security to prevent the cable 140 slipping through out of the cable-wrap 120, and so provides a location at which the cable 140 may exit the cable-wrap 120 in a stable manner. The cable 140 typically bends at the point at which it exits the cable-wrap 120, and the resistance to this bend by the stiffness of the cable 140 can cause the cable 140 to become unravelled and exit the cable-wrap unintentionally. The pinch-point 123, however, provides a formation about which the cable 140 can bend, retaining the remaining cable 140 within the cable-wrap 120. If this pinch-point 123 is formed towards an upper surface of the appliance 100, then the cable 140 will tend to extend from the food processing appliance 100 from an upper surface opposite to the lower surface 111 from which the tools 130 extend, thus helping to reduce the possibility of entanglement of the cable 140 and tools 130.

As shown in Figures 3a and 3b, in the exemplary embodiment of the invention, the flange 122 may have a radially and/or axially extending notch 124 formed in it. In the illustrated embodiment, the notch 124 is provided on the wall 125. During wrapping/unwrapping of the cable 140 from the cable-wrap 120, the cable 140 may be securely located within the notch 124 to secure it and prevent further unintended wrapping or unwrapping. The notch 124 is preferably located at the upper side of the appliance 100, opposite to the side on which the tools 130 attach, to help prevent tangling of the cable 140 and the tools 130. In an exemplary embodiment, the cable 140 is resilient and the notch 124 has a width equal to or just smaller than the maximum cross-sectional dimension of the cable 140 (for example, the diameter in the case of a cylindrical cable). Preferably the width of the notch 124 is between 80 and 100% of that maximum cross-sectional dimension, or more preferably between 90 and 95%. This can cause squeezing of the resilient cable 140 within the notch 124, which acts to secure it. Additionally, the notch 124 preferably narrows along its axial and/or radial extent, for example it may form a "V" or a "U" at its blind end, such that the cable 140 may be resiliently held within it.

As can be seen in the exemplary embodiment of Figure 4, the notch 124 may be located with pinch-points 123 either side of it on the wall 125. This can further enhance the securing of the cable 140 within the notch 124 as the sides of the notch 124 and the pinch-points 123 provide formations either side of the cable 140 around which it can bend, securing it in place.

As shown in Figure 2, when rested on a horizontal surface Z rear-down, such that the cable wrap 120 contacts the surface Z across its exterior surface, the cable wrap 120 supports the food processing appliance 100. To facilitate this, the exterior end surface of the cable-wrap 120 (the end portion or flange 122) is preferably substantially flat. However, it may optionally comprise a rim or lip. The centre of gravity CG of the appliance 100 is preferably such that when the appliance 100 is oriented vertically, rear-down, with the tools 130 extending substantially horizontally from the housing 110, the centre of gravity CG is positioned vertically above the cable-wrap 120 so as to be supported by it. The centre of gravity CG may also be located in a lower half of the vertical extent of the appliance 100 when oriented vertically so as to aid stability. The flange 122 may optionally further be provided with gripping formations made of rubber or similar material with a high coefficient of friction.

To add further stability, a handle 112 (or other component of the appliance 100) may extend near to, or to, the horizontal surface Z on which the flat surface of the cable wrap 120 is resting. For example, the outer surface (or "heel" when the cable-wrap is placed in contact with surface Z) of the cable wrap 120 and the handle 112 may have a similar, or the same, extent along the vertical axis.

When the appliance 100 is rested in this vertical orientation, the cable 140 held within the cavity 126 of the cable-wrap 120 will tend to slump downwardly, under its own weight. This causes the cable 140 to sit behind the wall 125 such that it is at least partially or, more preferably, completely accommodated within the cavity 126. This even further reduces the likelihood of the cable 140 becoming unwrapped from the cable-wrap 120. Even more particularly where the pinch-point is formed on the wall 125, this tends to put the cable 140 behind the pinch-point 123 such that it cannot easily exit through it by accident.

The shape of the flange 122 and wall 125 may be curved to form a dish-shaped recess. When the appliance 100 is oriented vertically, the cable 140 will be encouraged by this curved surface into this dish-shaped recess and thus be securely held within it. The flange 122 may optionally further comprise ridges 128 encouraging a neat arrangement of the winds of the cable 140 within the cavity 126, as is illustrated in Figure 5b. Alternatively, the flange 122 may comprise grooves or similar formation to achieve this purpose.

In the exemplary embodiment, the cable exits the housing at 90 degrees from the notch 124 about the axis of the wrapping post 121 (in Figure 5b, the cable can be seen residing within the spool at point 129 in the vicinity of the exit point, which is located on the surface of the spool). The cable may exit the housing at any other orientation, for example at 0 degrees from the notch 124, or preferably at 180 degrees from the notch 124.

In the exemplary embodiment, the flange 122 has a diameter substantially the same as the portion of the main housing 110 to which it attaches. This provides a more attractive appearance and allows the cable-wrap 120 to better support the appliance 100 when the appliance 100 is rested on the cable-wrap 120.

This cable-wrap 120 may be removably attached to the food processing appliance 100 by, for example, screw-fittings (e.g., a threaded protrusion on one of the cable wrap 120 and the appliance 100 threadedly connecting to a threaded recess on the other of the cable-wrap 120 and appliance 100), bayonet fittings, clips, latches, snap-fittings, or other removable attachment means. In this way it is possible to remove the cable-wrap 120 for cleaning it, and for cleaning the corresponding surface of the food processing appliance 100 that it covers when attached to it. Preferably, if removably detachable, the cable wrap 120 is made of a dishwasher-safe material (e.g., nylon or a similar dishwasher-safe plastic) such that it may be washed in a dishwasher when separated from the food processing appliance. In this way the cable-wrap 120 can be rendered easier to clean.

Alternatively, the cable-wrap 120 may be integrally formed with the food processing appliance 100 so as to help simplify production. For example, it may be formed as an integral component of the main housing 100 through injection moulding. Alternatively, it may be formed as a separate component permanently attached to the main housing 110.

The flange 122 may be removably attached to the wrapping-post 121, permanently attached, or integrally formed therewith. Permanent attachments may be formed by welding, screws or other similar means.

In an alternative embodiment, the cable-wrap 120 may have two axially-spaced flanges 122 formed on the wrapping-post 121 forming a cavity 126 between them for receiving the cable 140. This configuration avoids wear to the exterior of the main housing 110, which, being larger and housing important components, is less easy to replace.

### Ejector switch

As can be seen in Figure 1, the appliance 100 has two user-actuatable controls: the speed switch 113, and the ejector switch 114.

The speed switch 113 may be one used to select one or more operating states as well as an "off" state. For example, the speed switch 113 may be rotatable or slidable between a set of discrete, indexed speeds, or it may be continually movable along a continuous range of speeds. The speed switch 113 may also be actuatable to select an instantaneous elevated speed setting (e.g., a so-called "pulse" setting). The speed switch 113 is resiliently biased away from such a setting so that it will only enter it for as long as it is held in it by the user, and when released will return to the "off" position.

The speed switch 113 of the exemplary embodiment is located on a handle 112 extending from the main housing 110. Alternatively, it may be provided on a surface next to, and extending coplanar with, the handle 112. In this way the user may grip the handle 112 with four fingers and their hand whilst actuating the speed switch 113 with their thumb. The speed switch 113 may be a pivoting switch as shown in the figures, or a rotatory dial, or a slider.

The ejector switch 114 is provided on the housing and is actuatable to eject the removably attachable tools 130 from the attachment formation 117 to which they are provided as releasably attachable. Ejection may be achieved using any of the actuatable tool ejection systems known in the art.

The ejector switch 114 is provided at a different location on the housing 110 to the speed switch 113 to help avoid accidental actuation of one switch when actuation of the other is intended. For example, the ejector switch is not located on or next to the handle 112. Preferably, the distance X between the ejector switch 114 and the speed switch 113, measured along the surface of the housing 110, is such that it is not in the range of movement of the fingers of the average human adult hand whilst also gripping the handle 112 with the same hand. For example, in order to achieve this, the distance X is 5 cm or more, and may more preferably be 8 cm or more. This prevents the user from accidentally actuating the wrong controller. Due to the normal size of such appliances, especially handheld appliances, the distance X is typically no greater than 20 cm, or preferably 15 cm.

The space on the housing 110 between the two switches 113 and 114 created by the distance X may optionally be utilised to provide a user feedback display. This may take the form of an indicator light showing e.g., an energising status of the appliance 100, or a speed display, or other form of visual/aural feedback device.

In the illustrated embodiment, the speed switch 113 and the ejector switch are located on different planes of the housing 110. As can be seen in Figure 2, an angle Y between a plane of the surface on which the speed switch 113 is located and that on which the ejector switch 114 is located (indicated by respective dotted lines in the drawing) is preferably greater than 30 degrees, and more preferably greater than 45 degrees. This separation by angle Y further helps avoid accidental actuation of one switch when actuation of the other is intended, as it is unlikely that movement along one plane (e.g., a finger slipping) will result in actuation along the other. As illustrated, the angle Y is less than 90 degrees. This allows the user to more easily observe both the speed switch 113 and the ejector switch 114 from above when the appliance 100 is oriented substantially horizontally. This enables the user to confirm correct actuation of these switches during use without having to change the orientation of the appliance 100.

The plane of the surface on which the speed switch 113 is located is preferably substantially at a right-angle to the angle of extension of the tools 130 away from the housing 110. This helps enable holding of the appliance 100 using the handle 112 substantially horizontal (for example, within +/-15 degrees of horizontal, and more preferably within +/-5 degrees) during actuation of the speed switch 113, with the tools 130 substantially depending vertically into the foods/beverages being processed.

As shown in Figure 4, the switches 113 and 114 are located on surfaces formed at a substantial right-angle to the side-surfaces, and separated from the side-surfaces of the housing 110 by a gap 118. This gap 118 may be, for example, 5mm or more. The gap 118 further helps to prevent accidental actuation of the switches 113, 114 by objects sliding along the side of the housing 110.

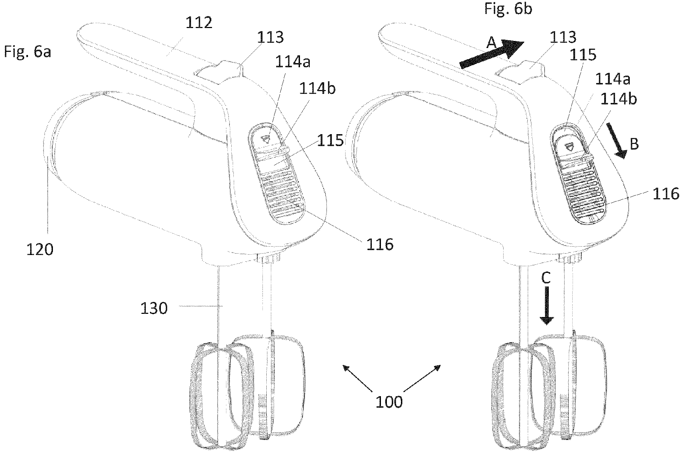

As shown in Figures 6a and 6b, a direction of actuation of the speed switch A is lateral to the handle. It is therefore along an axis different to, and more preferably substantially orthogonal to the direction of actuation of the ejector switch B (i.e., the direction in which the finger moves when actuating the switch). It is also in a direction different to the direction along the line X from the speed switch A towards the ejector switch B. This helps avoid accidental actuation of one switch when actuating the other as a motion along one direction is unlikely to result in actuation along the other. In the exemplary embodiment the actuation directions are in perpendicular directions, but other angles may alternatively be employed between 0 degrees and 90 degrees. For example, the actuation directions may be at at least 30 degrees, or preferably at least 45 degrees, or more preferably at least 60 or 75 degrees. Indeed, the direction of actuation of the speed controller B may simply be opposite but parallel to the line from the speed switch A towards the ejector switch B (line X as shown in Figure 1).

The direction B is preferably not separated from the direction C of ejection of the tools 130 by more than 90 degrees, and more preferably by not more than 45 degrees, to help simplify construction of the ejection mechanism by helping to avoid the need to convert motion into one direction to motion in a widely-separated direction.

The ejector switch 114 of the exemplary embodiment is a slider-switch moving along a surface of the housing 110 during actuation. This can avoid the need for buttons having to travel into/out of the housing, which may be stiff or generally difficult for a user to actuate. Where the ejector switch 114 is a slider, it may move within and along a recessed channel 115 formed in the housing 110 during actuation. To strengthen the switch 114 it may comprise a sliding section 114a extending along the channel 115, and preferably substantially contained within it, and a grip section 114b extending substantially at a right-angle to the channel 115. In this way the sliding section 114a helps prevent bending of the switch 114 as it is pushed, and the grip section 114 can help maintain a better mechanical coupling with the hand of the user as it can be gripped between opposing fingers. Recessing of the switch 114 into the channel 115 can help prevent pinching of e.g., the user's skin between the switch 114 and the housing 110.

The ejector switch 114 and the speed switch 113 are preferably functionally linked such that one button cannot be actuated whilst the other is being actuated. For example moving the speed switch 113 out of the "off" position may cause a blocking element to block movement of the ejector switch 114. Alternatively or additionally, actuating the ejector switch 114 may disconnect an electrical supply to the motor of the appliance, or move a blocking element to block movement of the speed switch 113 away from the "off" position.

### Housing

A vent in the form of a grille 116 is formed in the housing 110 to allow hot air to escape, as illustrated in Figures 6a and 6b. This is located next to the ejector switch 114 so as to make use of a single, common aperture through the housing 110. This can simplify construction.

The housing may be a two-piece construction made of side-by-side first and second side shells 110a and 110b as shown in Figure 4. These may be held together by integral fixing elements (e.g., screws, or other fittings) or may be held together by a third shell element 110c that extends over and fixes onto the two side-shell elements 110a and 110b in order to hold them together. Alternatively the third shell-element 110c may simply be a fascia covering the join between the two side-shell elements 110a and 110b as they are held together by fixing elements. In this way the motor, electronics, gearing and other internal elements of the appliance 100 may be located onto one shell element (e.g., first side shell 110a) and then the second side shell element 110b may be placed on it to enclose the internal elements, and then the second shell element 110b fixed in place by attaching the third shell element 110c over them. This can simplify construction.

A three-part construction of the housing 110 is advantageous in that the third shell element 110c can cover the unsightly join between the two side-shell elements 110a and 110b. A two-part construction of the housing 110, with the two side-shell elements 110a and 110b connected by glue, snap-elements, screws, or other fixation means, is advantageous in that it can minimise the number of parts.

The switches 113 and 114 and grille 116 are preferably located at the join/gap between the side-shell components 110a and 110b. This allows them to extend between the shell components 110a and 110b, thus helping to avoid the need for through-holes to be formed in the side-shell components 110a and 110b which might weaken their construction. Where a slider switch is used (e.g., for ejector switch 114) the sliding direction B of the switch is preferably along the join between the side-shell elements 110a and 110b for similar reasons of helping to avoid having to provide holes in the side-shells 110a and 110b that might weaken their construction.

Similarly, the cable wrap 120 may attach to the main housing 110, fixedly (e.g., by glue, with screws, or sonically or otherwise welded in place etc.) or removably, through a hole formed at the join between the first and second side shells 110a and 110b co-operatively therebetween.

### Ventilation

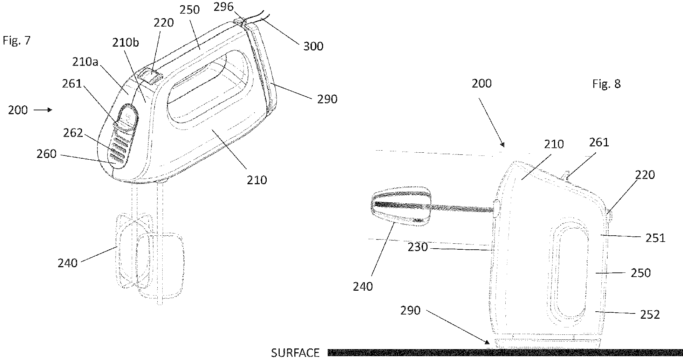

A device 200, according to a further embodiment of the invention, is shown in Figures 7, 8, and 9. The device 200 (in this exemplary embodiment, a hand mixer) comprises a housing 210 made up of side-by-side housing shells 210a and 210b that co-operatively substantially surround the internal sensitive components including motors, power supplies, transformers, electronics, gearing etc. to protect them from contact with the outside environment.

The device 200 includes detachable tools 240 which are driven to rotate by a motor within the housing 210 by suitable gearing. A speed-switch 220 is provided for controlling energising and/or speed of the motor. The speed switch is preferably located substantially above (e.g., within a vertical cylinder defined by the volume of rotation of the tool 240 along their axis of rotation) the tools 240 to enable easy placing and control of the tools 240. An attachment formation 230 is provided on a lower surface of the housing 210 to allow the device 200 to be attached to a stand 400 that will be described later.

A handle 250 is provided on the main body of the housing 210 which is dimensioned to be grasped by the average human adult hand. The handle 250 extends at a front end 251 (i.e., the end proximate to the tools 240) from an area of the housing main body part 210 proximate to the speed-switch 220, such that a user may hold the device 200 by the handle 250 with the four fingers of their hand and actuate the speed switch 220 with their thumb. The handle 250 also connects at a rear end 252 (i.e., the end distant from the tools 240) to a rear portion of the main body of the housing 210. In the exemplary embodiment of Figures 7 to 12, the handle 250 is integrally formed with the main body of the housing 210 and is defined by an aperture running through the housing. As such, the elongate dimension of the handle 250 is parallel to, or at least substantially parallel to, the elongate dimension of the main body of the housing 210.

A panel 260 is mounted on the front of the housing 210 having a grille 262 for permitting intake or exhausting of air for cooling the interior of the device 100. An ejector switch 261 is also mounted on the panel 260. This may be a sliding ejector switch.

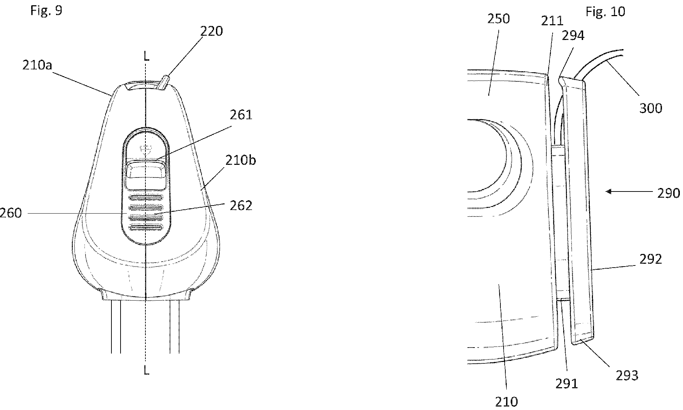

The device 200 is provided at its rear end 211 (i.e., that distant from the tools 240) with a cable-wrap 290. As can be seen in Figure 10, the cable wrap 290 comprises a spool in the form of the wrapping-post 291 which connects at one end to the housing 210 and at the other has a flange 292. The surface area of the flange 292 extends over at least 80%, and more preferably at least 90% of the maximum cross-sectional surface area of the appliance (in this case formed of the handle 250 and the main body of the housing 210). This maximum cross-sectional area need not be the same as the outer surface area of the surface 211. This aids the stability of the appliance when it is rested upon its end or base (rested upon the cable-wrap 209). Additionally, the maximum cross-sectional dimension of the cable-wrap 209 is at least 80% of the length of the maximum cross-sectional dimension of the housing 210 and the handle 250. Having the cable-wrap 290 extend over both the main body of housing 210 and the handle 250 also maximises space utilisation and provides more area onto which the cable 200 may be wrapped.

In order to further promote stability and strength, the maximum cross-sectional dimension (in the case of a cylindrical spool, the diameter) of the wrapping post 291 is preferably at least 50% of the maximum cross-sectional dimension of the appliance. Additionally, in the embodiment shown in Figure 10, it is at least 50% of the of the maximum cross-sectional dimension of surface 211. The centre of gravity of the appliance 200 (the combined centre of gravity of the main body of the housing 210 and the handle 250) is located above the wrapping-post 291 in this configuration to further improve the stability. Preferably, the centre of gravity of the main body of the housing 210 and the handle 250 is close to the central axis of the wrapping post 291. For instance, it is located within the central 50% of the post 291, preferably within the central 30%, and more preferably within the central 10%. This helps to prevent the appliance from being easily knocked over when rested upon the cable-wrap. To further improve the stability, the centre of gravity of the appliance 200 is preferably in the lower half of the appliance when rested upon the cable-wrap. In other words, the centre of gravity of the appliance 200 is located within the half of the housing adjacent to the cable-wrap. Preferably it may be located within the bottom 40% of the appliance, or more preferably 30% of the appliance.

As the cable wrap 290 is located at the base end of the housing 210, this means that the device 200 can be rested on the cable wrap 290 with the tools 240 extending at a height (e.g., 8 cm or more) such that they can be advantageously suspended above a bowl to catch drops of food/liquid clinging to the tools 240. Moreover the housing 210 is not located in contact with the surface and thus not directly exposed to liquids, dirt, or foodstuffs located on the surface on which the device 200 rests.

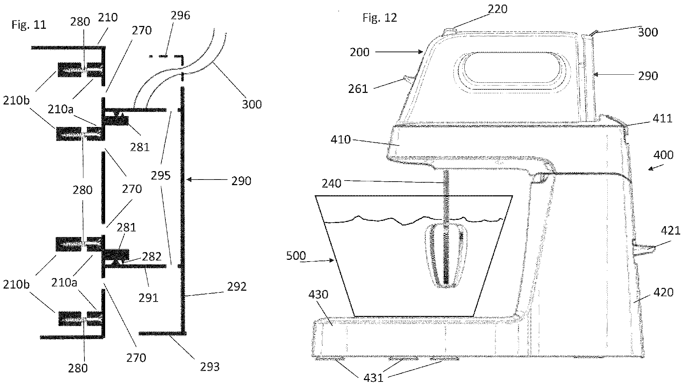

As shown in Figures 10 and 11, the flange 292 is gapped from the housing 210 to define a groove therebetween, in a similar manner as described for a previous embodiment. The cable 300 may therefore be wrapped about the wrapping post 291 and held firmly within the groove. The flange 292 has a wall or skirt 293 extending from its perimeter (or circumference) part-way towards the surface 211 to form a dish-shaped recess or cavity that the cable 300 can slump downwardly into when the device 200 is oriented in the vertical orientation (as depicted in Figure 8) and the cable is partly or wholly wrapped on the cylindrical wrapping post 291. As illustrated in Figure 10, the wall or skirt 293 forms a pinch-point 294 where it is harder to unwrap the cable 300 due to the narrowing of the gap at this point: this helps to retain the cable 300 in a configuration where it extends from the top of the device 200, on the opposite side to the tools 240.

As shown in Figure 11, ventilation holes 270 are formed in the housing 210 for permitting either intake or exhaustion of air for cooling internal components of the device 200. The cable wrap 290 extends substantially opposite to the openings of these ventilation holes 270, thus blocking direct sight of the ventilation holes 270 and helping to prevent material ingress into the holes. As the holes 270 are located at an opposite end of the device 200 to the grille 262, substantially straight, and thus relatively fast, unobstructed air-flow is provided between the grille 262 and the holes 270, compared to a flow-path that e.g., turns 90 degrees along its path between entrance and exit. This promotes improved airflow and cooling.

Where the ventilation holes 270 are additionally or alternatively located so as to be covered by the wrapping post 291, the wrapping post 291 can have additional ventilation holes 295 for allowing air flow to/from the ventilation holes 270. As such, the housing 210 and the cable-wrap 290 provide double filtration of the air, by providing a double set of holes for ventilation. Air that travels through the holes 295 is advantageously also filtered by the cable 300 when it is partially or wholly wrapped on the wrapping post 291. The ventilation holes 295 on the wrapping post 291 are provided at the end in the vicinity of the flange 292, such that the wall 293 provides shielding. Thus, in this exemplary embodiment, none of the holes 270, 295 are directly externally exposed (face directly outwards) but are all shielded by the arrangement of the cable-wrap 290. The cable-wrap 290 intersects the direct line of sight of each of the holes 270, 295 to the external surroundings.

The cable wrap 290 is attached to the housing 210 by attachment elements 281. This may be any one of a screw/threaded attachment, a glue attachment, clips, a bayonet attachment, bolts/screw/pegs, welding etc. The cable-wrap 290 may be removably attachable to the housing 210 by a screw/threaded attachment, a bayonet attachment, or via the engagement of a resilient formation 282 on one of the housing 210 or the cable-wrap 290 or on both. Preferably, if the cable wrap 290 is attached to the housing 210 using screws/bolts/nails/pegs etc. the apertures for inserting these are located so as to also be screened by the cable-wrap 290, for example by the flange 292.

Especially where the cable wrap 290 is provided so as to be removably-attachable to the housing 210, two or more interchangeable cable wraps 290 may be provided. These cable-wraps 290 may have differing colours, surface-designs and/or shapes so that the style of the device 200 may be changed.

As also can be seen in Figure 11, the two shells 210a and 210b of the housing 210 are held together by fasteners 280 which extend through or into holes or recesses (such as blunt holes) formed in each shell 210a, 210b. In a similar configuration as that employed for the ventilation holes 270, the cable wrap 290 extends opposite to these holes/recesses so as to screen them from dirt/food ingress.

Where a notch 296 for the cable 300 is formed in the wall/skirt 293 and flange 292 (as indicated by the dashed line in Figure 10) the ventilation holes 270 and fasteners 280 may be located so as not to be opposite it or in its immediate vicinity such that the notch 29 is not aligned with these features. This is to prevent the ingress of food or other dirt through the notch 296 and then the ventilation holes 270. However, even when located opposite they still benefit to a significant extent from screening due to the narrowness of the notch 296 and the cable 300 being located within the notch 296.

In alternative embodiments, the cable-wrap may be employed to screen and/or shield formations on the surface of the housing other than ventilation holes or connection formations. For example, the cable-wrap may shield formations extending outwardly from the surface of the housing, such as buttons or controls. The above-described features may be provided in any combination, and the arrangement of the holes may be provided in any configuration. For example, holes may only be provided on the housing within the spool, exterior to the spool, or both. Any number of holes may be provided. The holes may be formed as a grille, or in an alternative configuration.

### Stand

The device 200 may, as shown in Figure 12, be attached to a stand 400, so as to free the hands of the user for other tasks and so that the user does not have to hold the device during long periods of processing. The device 200 is attached to the stand 400 using attachment formation 230. For example, spring-loaded hooks of the stand 400 may extend into recesses of attachment formation 230.

The stand 400 consists of a head unit 410, an upright section 420, and a base unit 430. The upright section 420 connects at a lower end to the base unit 430 and at an upper end to the head unit 410, with the head unit 410 and the base unit 430 both extending horizontally in substantially the same direction when the upright section is oriented substantially vertically. In this way the device 200 is supported by the head 410, which is held at a predetermined height by the upright section 420 above the base unit 430. A bowl 500 can be located on the base unit 430 such that the tools 240 of the device 200 extend into the bowl 500 to process food therein. An aperture or notch may be provided in the head unit 410 for the tools 240 to extend through whilst the device 200 is supported along its entire length by the head unit 410.

A head-release switch 421 is provided on the upright section for releasing the head unit 410 to pivot upwardly about a pivot inter-connecting the upright section 420 and the head 410. A releasable latch 411 is provided on the head unit 410 for latching the device 200 onto the head unit 410.

As the device 200 is connected to the stand 400 primarily on one side (e.g., its lower side) the cable 300 advantageously is arranged to exit the wrapping-post 291, and the cable-wrap 290, on the opposite side (e.g., the upper side). This lessens the likelihood that the cable 300 will interfere with connection to the stand 400.

The base unit 430 rests on feet 431. The feet 431 may include vibration and/or weight sensors (e.g., accelerometers) powered either externally or by a battery of the stand 400. These vibration/weight sensors may communicate with the device 200 wirelessly using e.g., WiFi or Bluetooth via suitable wireless communication modules, and indicate to the device 200 when an imbalance has been created leading to vibration of the stand 400 such that it might risk moving over the surface it is located on or event falling over. The device 200 may then alter the speed of the motor or deactivate in response to this indication.

The stand 400 may also feature a user-interface such as a touch-screen interface in one or two-way communication (either wired or wireless) with the device 200. The user may then control the device 200 using this user interface, and view feedback from the device 200 on the interface.

The tools 130 and 240 may be any food processing tool or combination thereof. This includes whisks, beaters, mixers, blenders, shredders, graters, slicers, cutters, juicers, peelers, and other food processing tools. Whilst the appliances 100 and 200 are depicted as a hand mixer, it may be any food processing appliance, particularly any hand-held appliance, including food processors, hand-blenders, stand-mixers, etc. Indeed the appliance 100 may be any electrically-powered device, including powered hand-tools such as hand-drills, electric screw-drivers, gardening tools, strimmers, hedge-cutters etc.

The housings 110 and 210 are preferably made out of a material that is dishwasher safe and/or food safe.

For the avoidance of doubt, "fingers" as defined herein includes the thumb.

"Food safe" in this context means any substance that does not shed substances harmful to human health in clinically significant quantities if ingested. For example, it may be BPA-free.

"Dishwasher safe" means that it should be physically and chemically stable during prolonged exposure to the conditions prevailing within a dishwasher machine. For example it should be able to withstand exposure to a mixture of water and a typical dishwasher substance (e.g., washing with Fairy^{™} or Finish^{™} dishwasher tablets and water, at temperatures of 82 degrees centigrade for as long as 8 hours without visibly degrading (e.g., cracking)).

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

The invention is also defined in the following clauses:
1. An electrical appliance, comprising a housing, a cable and a cable-wrap, wherein the cable-wrap comprises a spool and an end portion connected to the spool, and the end portion includes a cavity for receiving the cable.
2. The electrical appliance of clause 1, wherein the cavity can accommodate the cable.
3. The electrical appliance of clause 1 or 2, wherein when the appliance is rested on a flat surface in at least one configuration, the cable slumps down into the cavity under its own weight.
4. The electrical appliance of any preceding clause, wherein the maximum cross-sectional dimension of the spool is less than half the maximum cross-sectional dimension of the appliance in the region of the spool; and/or wherein the dimension of the cavity perpendicular to the axis of the spool is greater than the dimension of the cavity along the axis of the spool; and/or wherein the dimension of the cavity along the axis of the spool is at least half the maximum cross-sectional dimension of the cable, and preferably at least the maximum cross-sectional dimension of the cable; and/or wherein the cable-wrap forms a dish-shaped recess.
5. The electrical appliance of any preceding clause, wherein the cable-wrap includes at least one formation for forming a pinch point to restrain the cable; and/or wherein the cavity is defined between the end portion and the housing; and/or wherein the spool extends beyond the confines of the cavity.
6. The electrical appliance of any preceding clause, wherein the extension of the spool beyond the cavity in combination with the housing defines a slit of sufficient width to accommodate the cable.
7. The electrical appliance of any preceding clause, further comprising a notch configured to locate the cable on its exit from the housing.
8. An electrical appliance, comprising a housing and a cable, wherein the appliance is handheld and the housing comprises a notch configured to locate the cable on its exit from the housing.
9. The electrical appliance of clause 7 or 8, further comprising a cable-wrap, wherein preferably the notch is formed in the cable-wrap; and/or further comprising at least one protrusion to form a pinch-point for restraining the cable, the or each protrusion preferably being located respectively on one or both sides of the notch; and/or further comprising a tool provided on a first side of the appliance, wherein the notch is provided on a second side of the appliance, preferably wherein the second side is opposite to the first side; and/or wherein the cable is resilient, and the notch has a width that is less than the maximum cross-sectional dimension of the cable.
10. The electrical appliance of any preceding clause, wherein the housing has an outer surface, optionally wherein the electrical appliance further comprises a cable-wrap comprising a spool, wherein the cable-wrap extends over a portion of the outer surface, the portion of the outer surface over which the cable-wrap extends having at least one feature.
11. An electrical appliance comprising:
   a housing having an outer surface; and
   a cable-wrap comprising a spool for a cable;
   wherein the cable-wrap extends over a portion of the outer surface, the portion of the outer surface over which the cable-wrap extends having at least one feature.
12. The appliance of clause 10 or 11, wherein the at least one feature comprises one or more holes in the housing, preferably ventilation holes.
13. The appliance of clause 12, wherein the one or more holes are shielded by the cable-wrap; preferably wherein the one or more holes are shielded by the spool.
14. The appliance of clause 13, wherein the cable-wrap further comprises one or more holes for ventilation of the one or more holes in the housing; preferably wherein the spool comprises one or more holes; more preferably wherein the cable-wrap further
   comprises an end portion connected to the spool, such that the ventilation holes of the spool are shielded by the end portion.
15. The appliance of any of clauses 12 to 14, wherein the housing comprises a further feature for providing airflow through the appliance, preferably wherein the cable-wrap is located at or adjacent to an end of the appliance and the further feature is located at an end of the appliance opposite to the cable-wrap.
16. The appliance of any preceding clause, wherein the housing comprises two or more housing-shells, and the at least one feature is associated with fixing elements configured to hold the two or more housing-shells together; and/or wherein the cable-wrap comprises a notch to locate the cable, and the at least one feature is not aligned with the notch.
17. The appliance of any preceding clause, in which the appliance has a base for supporting the appliance on a surface, the cable-wrap being located at or adjacent to the base, wherein the housing comprises a body part and a handle part, and the base extends across the body part and the handle part.
18. An electrical appliance, the appliance having a base for supporting the appliance on a surface, and comprising:
   a housing having a body part and a handle part; and
   a cable-wrap comprising a spool for carrying the cable;
   wherein the cable-wrap is located at or adjacent to the base, and wherein the base extends across the body part and the handle part such that the cross-sectional area of the base is no smaller than 80% of the cross-sectional area of the appliance, and preferably no smaller than 90%.
19. The appliance of clause 17 or 18, wherein the maximum cross-sectional dimension of the base extends over at least 80% of the maximum cross-sectional dimension of the appliance, and preferably 90%; and/or wherein the centre of gravity of the appliance is coincident with the central 50% of the spool, preferably within the central 30%, even more preferably within the central 10%; and/or wherein the spool has a maximum cross-sectional dimension of at least 50% of the maximum cross-
   sectional dimension of the appliance, and preferably between 50% and 70%; and/or wherein the centre of gravity of the appliance is located within a half of the appliance adjacent to the base, preferably within the 40% of the appliance adjacent to the base, more preferably within the 30% of the appliance adjacent the base; and/or wherein the housing is configured to accommodate tools extending therefrom, preferably wherein the tools extend in a direction parallel to an outer surface of the base, and/or wherein the tools are located at a distance of 8 cm or more from the outer surface of the base; and/or wherein the body part and the handle part are both integral to the appliance; and/or wherein the handle part extends along at least part of the length of the appliance, preferably wherein the handle part and the body part are adjacent elongate parts.
20. An electrical appliance, comprising a housing having a body part and a handle part, a cable and a cable-wrap, wherein the cable-wrap comprises a spool and an end portion connected to the spool, and the end portion includes a cavity for receiving the cable, and wherein the cable-wrap extends over both the body part and the handle part; preferably: wherein the cavity can accommodate the cable, and when the appliance is rested on a flat surface in at least one configuration, the cable slumps down into the cavity under its own weight.
21. An electrical appliance for operating removably attachable tools, comprising:
   an ejection controller configured on actuation to actuate a mechanism for ejecting the tools from the appliance; and
   a user input configured to control a function of the appliance;
   wherein the ejection controller and the user input are spaced apart from one another, and wherein the user input has an actuation direction different to the direction from the user input to the ejection controller.
22. The electrical appliance of clause 21, wherein the actuation direction of the user input is perpendicular to the direction from the user input to the ejection controller; and/or wherein the ejection controller and the user input are located at a distance of at least 3 cm from one another measured along a surface of the appliance, and preferably at a distance of at least 5 cm, and even more preferably of at least 8 cm;
   and/or wherein the ejection controller and the user input are located on surfaces on different planes of the appliance, the surfaces being at at least 30 degrees to each other, and preferably at an angle of at least 45 degrees, more preferably at an angle between 30 and 90 degrees, even more preferably at an angle between 45 and 90 degrees; and/or wherein the appliance is a handheld appliance further comprising a handle configured to be gripped by four fingers of a hand of a user while a thumb of the same hand actuates the user input, in which configuration the ejection controller is located outside the arc of movement of any of the fingers and thumb of the hand; and/or wherein the ejection controller is a slider, the slider comprising a grip portion configured for gripping between opposed fingers; preferably wherein the appliance further comprises a vent, the vent being located on the same aperture as the slider.
23. The electrical appliance of any preceding clause, wherein the appliance is a kitchen appliance, preferably wherein the appliance is a handheld kitchen appliance, and even more preferably wherein the appliance is a hand mixer.
24. Removable cable-wrap; preferably wherein the cable-wrap comprises resilient formations for attachment to the housing.
25. The electrical appliance of any of clauses 1 to 23, wherein the cable wrap comprises the removable cable-wrap of clause 24.

## Claims

1. An electrical appliance for operating removably attachable tools, comprising:
an ejection controller configured on actuation to actuate a mechanism for ejecting the tools from the appliance; and
a user input configured to control a function of the appliance;
wherein the ejection controller and the user input are spaced apart from one another, and wherein the user input has an actuation direction different to the direction from the user input to the ejection controller.

2. The electrical appliance of claim 1, wherein the actuation direction of the user input is perpendicular to the direction from the user input to the ejection controller.

3. The electrical appliance of claim 1 or 2, wherein the ejection controller and the user input are located at a distance of at least 3 cm from one another measured along a surface of the appliance, and preferably at a distance of at least 5 cm, and even more preferably of at least 8 cm.

4. The electrical appliance of claim 1, 2 or 3, wherein the ejection controller and the user input are located on surfaces on different planes of the appliance, the surfaces being at at least 30 degrees to each other, and preferably at an angle of at least 45 degrees, more preferably at an angle between 30 and 90 degrees, even more preferably at an angle between 45 and 90 degrees.

5. The electrical appliance of any preceding claim, wherein the appliance is a handheld appliance further comprising a handle configured to be gripped by four fingers of a hand of a user while a thumb of the same hand actuates the user input, in which configuration the ejection controller is located outside the arc of movement of any of the fingers and thumb of the hand.

6. The electrical appliance of any preceding claim, wherein the ejection controller is a slider, the slider comprising a grip portion configured for gripping between opposed fingers.

7. The electrical appliance of claim 6, wherein the appliance further comprises a vent, the vent being located on the same aperture as the slider.

8. The electrical appliance of any preceding claim, wherein the arrangement is such that ejection controller and the user input cannot be actuated by the same hand of a user simultaneously.

9. The electrical appliance of any preceding claim, wherein the ejection controller and the user input are controllers of differing type, preferably selected from a list comprising sliders, buttons and pivot switches.

10. The electrical appliance of any preceding claim, wherein the user input is a speed controller.

11. The electrical appliance of any preceding claim, the appliance having a housing, wherein the housing comprises a first and a second shell, at least one of the ejection controller and the user input extending into the housing through one or more through-holes defined at a join between the housing shells cooperatively defined by the housing shells.

12. The electrical appliance of any preceding claim, wherein the appliance is a kitchen appliance, preferably wherein the appliance is a handheld kitchen appliance, and even more preferably wherein the appliance is a hand mixer.
